# EUROPEAN PATENT APPLICATION

(11) **EP 0 651 020 A2**
(43) Date of publication of application: **03.05.1995**
(21) Application number: 94117105.0
(22) Date of filing: 28.10.1994
(51) Int. Cl.: C08L 83/04, C08K 5/09, C08K 5/098, C08K 5/14

(54) **Heat-curing silicone rubber composition**

(30) Priority: 29.10.1993 JP 294650/93
(71) Applicant: Dow Corning Toray Silicone Company, Limited, Tokyo 103 (JP)
(72) Inventor: Honma, Hiroshima, Dow Corning Toray Silicone, Ichihara-shi, Chiba Pref. (JP)
(74) Representative: Spott, Gottfried, Dr.

(57) **Abstract**

A highly mold-releasable heat-curing silicone rubber composition whose mold-release properties are substantially improved over those of previous silicone rubber compositions. The heat-curing silicone rubber composition comprising:
(A) silicone rubber base compound composed of
   (a) 100 weight parts organopolysiloxane gum with the average unit formula RₐSiO_{(4 - a)/2} where R denotes substituted and unsubstituted monovalent hydrocarbon groups and a is 1.95 to 2.05 and
   (b) 10 to 100 weight parts reinforcing filler,
(B) 0.025 to 5 weight parts higher fatty acid or metal salt of a higher fatty acid,
(C) 0.05 to 5 weight parts water, and
(D) 0.1 to 10 weight parts organoperoxide.

## Description

The invention relates to a heat-curing silicone rubber composition that exhibits an excellent mold releasability and is highly qualified for use in cavity-based moldings that have complex or intricate shapes.

Silicone rubber compositions are known to have generally poor mold-release properties, which results in fissuring in the rubber during de-molding and mold staining during long-term operations. One method to solve this problem consists of the addition of an internal release agent to the silicone rubber composition. Examples of these internal release agents are stearic acid, zinc stearate, and calcium stearate.

However, in the case of fabrication of intricately shaped silicone rubber moldings, for example moldings which present projections or have hollow bent or curved structures, release from the mold is poor even for silicone rubber compositions that contain internal release agent. This has resulted in substantial product defect rates due to breakage of projections on the molding or the facile development of cracks in the molding.

As a result of extensive investigations directed at solving these problems, we have surprisingly found that excellent mold-release properties are exhibited by silicone rubber compositions prepared by the addition of water and a particular type of compound to a silicone rubber base compound.

Our invention introduces a highly mold-releasable heat-curing silicone rubber composition whose mold-release properties are substantially improved when compared to those of previous silicone rubber compositions.

A highly mold-releasable, heat-curing silicone rubber composition whose mold-release properties are substantially improved over those of previous silicone rubber compositions is disclosed. Said heat-curing silicone rubber composition comprising:
(A) silicone rubber base compound composed of
   (a) 100 weight parts organopolysiloxane gum with the average unit formula RₐSiO_{(4 - a)/2} where R denotes substituted and unsubstituted monovalent hydrocarbon groups and a is 1.95 to 2.05 and
   (b) 10 to 100 weight parts reinforcing filler,
(B) 0.025 to 5 weight parts higher fatty acid or metal salt of a higher fatty acid,
(C) 0.05 to 5 weight parts water, and
(D) 0.1 to 10 weight parts organoperoxide.

The silicone rubber base compound, component (A) of the present invention, is the base ingredient of our silicone rubber composition and is well known. Component (a) in this silicone rubber base compound is an organopolysiloxane gum. The group R in this gum denotes substituted and unsubstituted monovalent hydrocarbon groups like alkyl such as methyl, ethyl, and propyl; alkenyl such as vinyl and allyl; cycloalkyl such as cyclohexyl; aralkyl such as beta-phenylethyl; aryl such as phenyl; and haloalkyls such as chloromethyl, 3-chloropropyl, and 3,3,3-trichloropropyl. The subscript a is an integer between 1.95 to 2.05. The molecular weight of this organopolysiloxane gum is not critical, and molecular weights within the range attributed to organopolysiloxane gums in the art can be used. Organopolysiloxane gums will typically have viscosities (25°C) of at least 10⁷ mm^{2/5} (centistokes) and average molecular weights of at least 25 x 10⁴.

The reinforcing filler constituting component (b) comprises those reinforcing fillers already known for use in silicone rubber base compounds. This component is exemplified by microparticulate silicas and carbon blacks. The microparticulate silicas are exemplified by fumed silica and precipitated silica. Preferred here are the ultramicroparticulate silicas with particle diameters no larger than 50 nanometers (millimicrons) and specific surfaces of at least 100 m²/g. Even more suitable are the surface-treated silicas, for example, silicas whose surfaces have been pretreated with organosilane, organosilazane, and diorganocyclopolysiloxane. Carbon blacks are used in particular when it is desired to impart electrical conductivity to the silicone rubber. The carbon blacks are exemplified by acetylene black, ketjenblack, furnace black, and thermal black.

Component (B) comprises the higher fatty acids and the metal salts of higher fatty acids. This component is essential for the appearance of mold releasability. This activity of component (B) is further strengthened by a synergistic effect arising from the presence of the water (component (C)). The higher fatty acids are exemplified by lauric acid, stearic acid, palmitic acid, oleic acid, and arachidic acid. The metal salts of higher fatty acids are exemplified by magnesium stearate, calcium stearate, zinc stearate, cobalt stearate, aluminum stearate, barium stearate, zinc laurate, barium laurate, magnesium laurate, calcium laurate, zinc oleate, magnesium oleate, and manganese oleate. Component (B) is added at the rate of 0.025 to 5 weight parts per 100 weight parts of the silicone rubber base compound comprising component (A). Excessive additions of this component cause a decline in the properties of the silicone rubber, particularly in its heat resistance and compression set. The desired mold releasability is not obtained when the addition is too low.

Water, component (C), is the component that distinguishes the composition of our invention. This component, which is also essential for providing mold releasability, induces a major improvement in the mold releasability when used in combination with component (B). The reasons for this activity by component (C) are not well understood. However, it is thought that the release activity of component (B) is enhanced as the result of the dissolution of a small amount of component (B) present at the surface of the molding by water (C) which forms a high-temperature steam layer at the mold interface with the surface layer of the silicone rubber. It also appears that the pressure generated by this steam functions to facilitate separation from the mold surface. Component (C) should be added at 0.05 to 5 weight parts per 100 weight parts component (A). Voids tend to be produced in the molding at more than 5 weight parts, while at less than 0.05 weight parts the effect on the mold releasability is not as large as would be desired.

The organoperoxide comprising component (D) used in the present invention is a curing agent that induces vulcanization of the invention composition. The organoperoxides already known in the art can be used such as dicumyl peroxide, di-tert-butyl peroxide, tert-butyl cumyl peroxide, 2,5-dimethyl-2,5-di(tert-butylperoxy)hexane, 1,1-bis(tert-butylperoxy)-3,3,5-trimethylcyclohexane, benzoyl peroxide, and 2,4-dichlorobenzoyl peroxide. Component (D) should be added in the range of 0.1 to 10 weight parts per 100 weight parts of component (A).

In addition to the components (A) through (D), the silicone rubber composition of this invention may also contain - insofar as the object of the invention is not compromised - the additives known for use in silicone rubber compositions. These additives are exemplified by inorganic fillers such as diatomaceous earth, quartz powder, calcium carbonate, mica, aluminum oxide, aluminum hydroxide, zinc oxide, magnesium oxide, titanium oxide, and iron oxide red; heat stabilizers such as the rare earth oxides, rare earth hydroxides, cerium silanolate, and the cerium salts of fatty acids; and silicone oils such as dimethylsilicone oils, phenylmethylsilicone oils, and diphenylsilicone oils.

The silicone rubber composition of our invention can be readily prepared by mixing components (A) and (B) through (D) to homogeneity. However, in a preferred sequence, the silicone rubber base compound is first prepared by mixing 100 weight parts organopolysiloxane gum (a) and 10 to 100 weight parts reinforcing filler (b), followed by addition to this compound with mixing of the 0.025 to 5 weight parts component (B) (higher fatty acid or metal salt of higher fatty acid), then the 0.05 to 5 weight parts water (C), and then the 0.1 to 10 weight parts organoperoxide (D).

Incorporation of the water (C) may be problematic in some cases. Thus, a preferred technique consists of the preliminary preparation of a mixture from the water (C) and silica micropowder followed by kneading this mixture into a mixture of components (A) and (B). The water (C) and silica micropowder proportions in this technique are preferably 1 to 100 weight parts silica micropowder per 100 weight parts water and particularly preferably 5 to 20 weight parts silica micropowder per 100 weight parts water.

The silicone rubber composition of this invention exhibits excellent mold-release characteristics. As a result, neither breakage nor fissuring will be produced in the silicone rubber molding during the de-molding process, even when the composition is used with intricately shaped molds. Accordingly, our silicone rubber composition is very useful for application in pressure-molding operations, such as transfer molding, injection molding, mold-based press molding, and the like.

The invention is explained in greater detail below through working examples. In the examples, parts indicates weight parts, the viscosity is the value at 25°C, and cSt indicates centistokes.

Figure 1 contains a schematic cross section of the mold used in the evaluation of the mold releasability in the examples of the invention.

Figure 2 contains an enlarged schematic cross section of the projections in the middle mold plate.

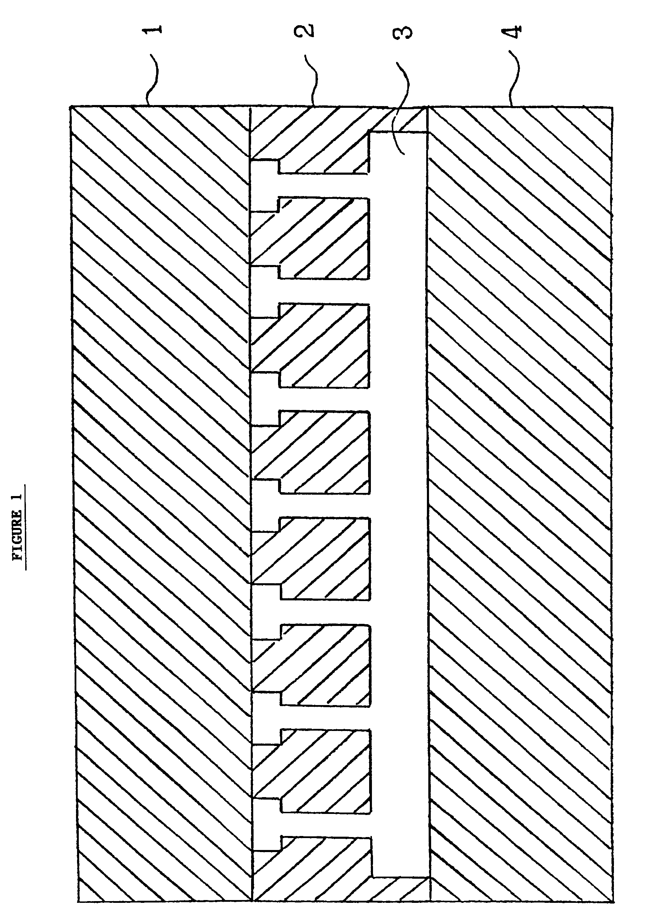

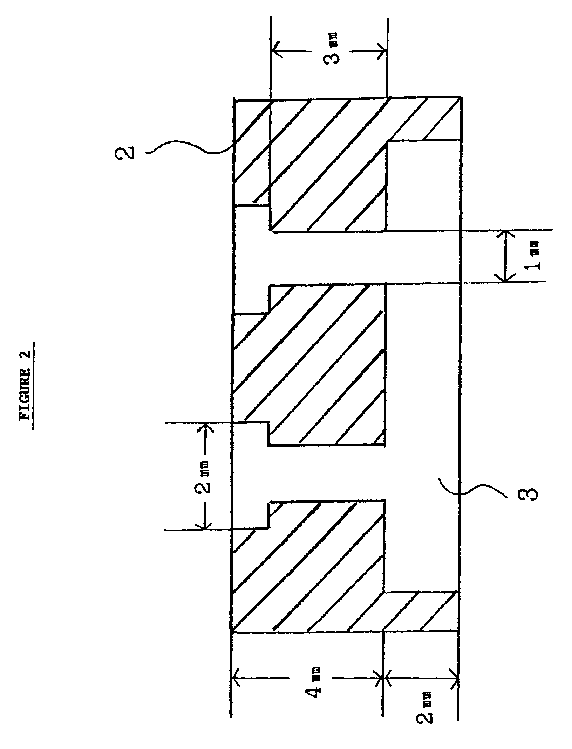

The mold as described in Figure 1 and Figure 2 comprises upper mold plate **1**, middle mold plate **2**, cavity **3**, and lower mold plate **4**.

The following procedure was used in the examples to evaluate the mold releasability. The silicone rubber composition was pressure molded using a mold that contained 77 projections (see Figure 1). After molding, the silicone rubber molding was forcibly removed. The number of projections on the molding that were torn off and remained in the middle mold plate was then counted, and this value is reported as the projection loss ratio (number of losses/77).

Example 1. A silicone rubber base compound was prepared by introducing the following into a kneader mixer and mixing while heating: 100 parts dimethylvinylsiloxy-endblocked organopolysiloxane gum (degree of polymerization = 5,000) composed of 99.85 mole% dimethylsiloxane unit and 0.15 mole% methylvinylsiloxane unit, 5.0 parts silanol-endblocked dimethylsiloxane with a viscosity of 60 mm^{2/5} (cSt), and 40 parts wet-process silica with a specific surface area of 130 m²/g. 0.2 part zinc stearate was subsequently kneaded into 100 parts of this compound on a two-roll mill, and the amount of water reported in Table 1 was then mixed into the composition. The water was added as the paste prepared by the addition of 10 parts dry-process silica with a specific surface of 200 m²/g to 90 parts water. This was followed by the addition with mixing of 0.4 parts 2,5-dimethyl-2,5-di(tert-butylperoxy)hexane to give a heat-curing silicone rubber composition. This heat-curing silicone rubber composition was submitted for measurement of its mold releasability, and these results are reported in Table 1.

**TABLE 1**

| | Examples | | | |
|---|---|---|---|---|
| | 1-1 | 1-2 | 1-3 | Comparative |
| silicone rubber base compound (parts) | 100 | 100 | 100 | 100 |
| zinc stearate (parts) | 0.2 | 0.2 | 0.2 | 0.2 |
| water (parts) | 0.9 | 0.45 | 0.225 | 0.0 |
| mold releasability (projection loss ratio) | 0/77 | 0/77 | 2/77 | 28/77 |

A heat-curing silicone rubber composition was prepared using the procedure of Example 1, but in this case changing the addition of the silanol-endblocked dimethylsiloxane (viscosity = 60 mm^{2/5} [cSt]) to 10.0 parts and using 40 parts dry-process silica with a specific surface of 200 m²/g in place of the 40 parts wet-method silica. The results are reported in Table 2.

**TABLE 2**

| | Examples | | | |
|---|---|---|---|---|
| | 2-1 | 2-2 | 2-3 | Comparative |
| silicone rubber base compound (parts) | 100 | 100 | 100 | 100 |
| zinc stearate (parts) | 0.2 | 0.2 | 0.2 | 0.2 |
| water (parts) | 0.9 | 0.45 | 0.225 | 0.0 |
| mold releasability (projection loss ratio) | 0/77 | 0/77 | 1/77 | 19/77 |

50 Parts of the silicone rubber base compound prepared in Example 1 and 50 parts of the silicone rubber base compound prepared in Example 2 were introduced into a kneader mixer, and a silicone rubber base compound was prepared by mixing while heating. 0.2 part zinc stearate was compounded into 100 parts of this base compound on a two-roll mill, and the resulting composition was mixed with water according to the procedure of Example 1. 0.4 part 2,5-dimethyl-2,5-di(tert-butylperoxy)hexane was then added with mixing to give a heat-curing silicone rubber composition. This heat-curing silicone rubber composition was submitted to measurement of its mold releasability, and these results are reported in Table 3.

**TABLE 3**

| | Examples | | | |
|---|---|---|---|---|
| | 3-1 | 3-2 | 3-3 | Comparative |
| silicone rubber base compound (parts) | 100 | 100 | 100 | 100 |
| zinc stearate (parts) | 0.2 | 0.2 | 0.2 | 0.2 |
| water (parts) | 0.9 | 0.45 | 0.225 | 0.0 |
| mold releasability (projection loss ratio) | 1/77 | 0/77 | 3/77 | 28/77 |

## Claims

1. A heat-curing silicone rubber composition comprising:
(A) 100 weight parts silicone rubber base compound composed of
(a) 100 weight parts organopolysiloxane gum with the average unit formula
RₐSiO_{(4 - a)/2}
where R denotes substituted and unsubstituted monovalent hydrocarbon groups and a is 1.95 to 2.05 and
(b) 10 to 100 weight parts reinforcing filler,
(B) 0.025 to 5 weight parts higher fatty acid or metal salt of a higher fatty acid,
(C) 0.05 to 5 weight parts water, and
(D) 0.1 to 10 weight parts organoperoxide.

2. A composition according to Claim 1, where the reinforcing filler is a silica having an average particle diameter no larger than 50 nanometers (millimicrons) and a specific surface area of at least 100 m²/g.

3. A composition according to Claim 2, where the silica is surface treated with an agent selected from organosilane, organosilazane, and diorganocyclopolysiloxane.

4. A composition according to Claim 1, where component (B) is a higher fatty acid selected from lauric acid, stearic acid, palmitic acid, oleic acid, and arachidic acid.

5. A composition according to Claim 1, where component (B) is a metal salt of a higher fatty acid selected from magnesium stearate, calcium stearate, zinc stearate, cobalt stearate, aluminum stearate, barium stearate, zinc laurate, barium laurate, magnesium laurate, calcium laurate, zinc oleate, magnesium oleate, and manganese oleate.

6. A composition according to Claim 5, where component (B) is zinc stearate.
